(19) Europäisches Patentamt
European Patent Office
Office européen des brevets

(11) EP 0 669 486 B1

# (12) EUROPEAN PATENT SPECIFICATION

(45) Date of publication and mention
of the grant of the patent:
**08.07.1998 Bulletin 1998/28**

(51) Int Cl.⁶: **F16J 3/04**

(21) Application number: **94309447.4**

(22) Date of filing: **16.12.1994**

(54) **Protective bellows**

Schutzbalg

Soufflet de protection

(84) Designated Contracting States:
**DE ES FR IT**

(30) Priority: **24.02.1994 GB 9403502**

(43) Date of publication of application:
**30.08.1995 Bulletin 1995/35**

(73) Proprietor: **DRAFTEX INDUSTRIES LIMITED**
**Edinburgh EH2 3AP, Scotland (GB)**

(72) Inventors:
• **Boyen, Remi**
**F-44300 Nantes (FR)**

• **Houis, Jacques**
**F-44470 Thouare Sur Loire (FR)**

(74) Representative: **Foster, David Martyn et al**
**MATHISEN MACARA & CO.**
**The Coach House**
**6-8 Swakeleys Road**
**Ickenham Uxbridge UB10 8BZ (GB)**

(56) References cited:
**EP-A- 0 487 840      EP-A- 0 506 125**
**DE-U- 8 807 327**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a protective bellows made of low-elasticity thermoplastic material in combination with and mounted on a rod-like member, the bellows having an integral fixing collar which has been moved axially along the rod-like member from an end thereof and resiliently fitted onto and around a circumferentially extending mounting surface of predetermined diameter on the rod-like member, the rod-like member also having a circumferentially extending intermediate surface which is axially positioned between the mounting surface and the end of the rod-like member and which has a diameter greater than the predetermined diameter of the mounting surface, so that the fixing collar has to be initially stretched to pass over the intermediate surface in order to be mounted onto the mounting surface.

Such an arrangement is shown in EP-A-0 506 125. The bellows or boot in this arrangement has an internal engaging ring for engagement with an internal groove on a disc brake assembly and an external engaging ring for engagement with an external groove around the disc brake assembly. Compressed air and a special jig are used to semi-automate the process of mounting the internal and external engaging rings in position. Clearly, this is a complex operation involving the use of an expensive jig. It may be justified where special considerations apply in relation to a disc brake but is not suitable for more general fitting of a bellows to a rod-like member.

The arrangement as first set forth above is also known from DE-U-8 807 327. Here, the fixing collar of a bellows is provided with an inwardly directed annular shoulder which is located in a groove around the casing of a steering mechanism. With normal types of elastic material, such as rubber, used for bellows, such an arrangement is satisfactory. However, it may be desirable for reasons of cost and otherwise to mould such bellows from thermoplastic material which may not resile satisfactorily onto the mounting surface if it is over-stretched to pass over the intermediate surface. The invention aims to deal with this problem.

In accordance with the invention, therefore, the known bellows is characterised in that the initial diameter of the fixing collar is so selected in relation to the diameter of the intermediate surface and in relation to the elasticity of the thermoplastic material that the pressure which the resiled fixing collar exerts on the mounting surface exceeds a predetermined minimum value through the expected life of the bellows.

Protective bellows embodying the invention will now be described, by way of example only, with reference to the accompanying diagrammatic drawings in which:

Figure 1 illustrates one of the bellows in cross-section and shows it being fitted into position on the steering mechanism of a vehicle;

Figure 2 corresponds to Figure 1 but shows a later stage in the fitting process;

Figure 3 corresponds to Figures 1 and 2 but shows the completion of the fitting process; and

Figures 4 and 5 are graphs for explaining the operation of the bellows.

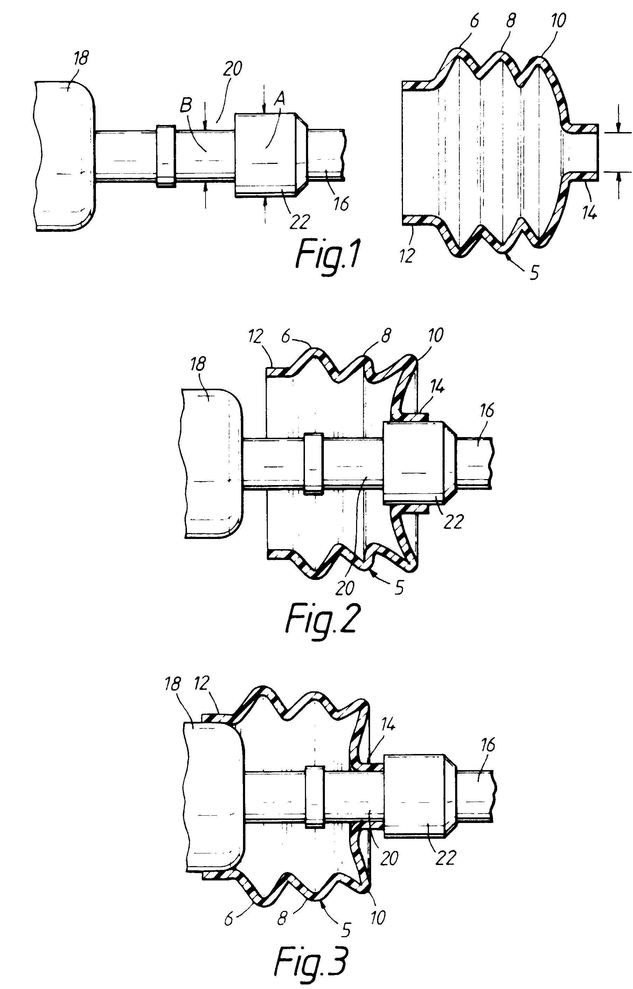

The protective bellows to be described in more detail below is for protecting the steering mechanism in a motor vehicle body. The bellows is shown diagrammatically at 5 in Figure 1 and comprises a plurality of bellows turns 6,8 and 10 (but there may be more or less than this number of turns in practice), together with fixing collars 12 and 14 at each of its ends. The bellows is for protecting a steering rod 16 where it emerges from a casing 18 containing the manually, mechanically or hydraulically operated steering mechanism. The mechanism causes the steering rod 16 to move in an axial direction for controlling the steering angle of one of the front wheels of the motor vehicle. A similar steering rod projects from the opposite end of the casing 18 and is for controlling the steering angle of the other front wheel (and is protected by a bellows similar to the bellows 5).

The bellows 5 is to be fitted onto the casing 18 and the rod 16 so that the collar 12 surrounds and is secured to the outside of the casing 18 and the collar 14 surrounds and is secured to a fixing region of the rod indicated at 20. As illustrated, though, the rod includes a boss 22 whose diameter A is greater than the diameter "B" of the fixing region 20 of the rod.

As shown in Figures 2 and 3, therefore, the fitting process involves stretching the fixing collar 14 to enable it to pass over the boss 22 until it becomes positioned over the fixing region 20 of the rod 16 as shown in Figure 3. At the same time, the fixing collar 12 contacts the circumferential surface of the casing 18. The collars 12 and 14 are sized to hold themselves resiliently in position.

It is advantageous to produce the bellows by blow-moulding from EPDM-polypropylene material or material of similar type, because such material has a lower cost than materials previously used such as thermoplastic polyurethane. However, polyurethane has greater elasticity than EPDM-polypropylene. If EPDM-polypropylene is used for the bellows 5, special dimensioning of the bellows is necessary, as will now be explained, in order to enable the material to cope with the stretching which is necessary to enable the fixing collar 14 to pass over the boss 22 (Fig. 2).

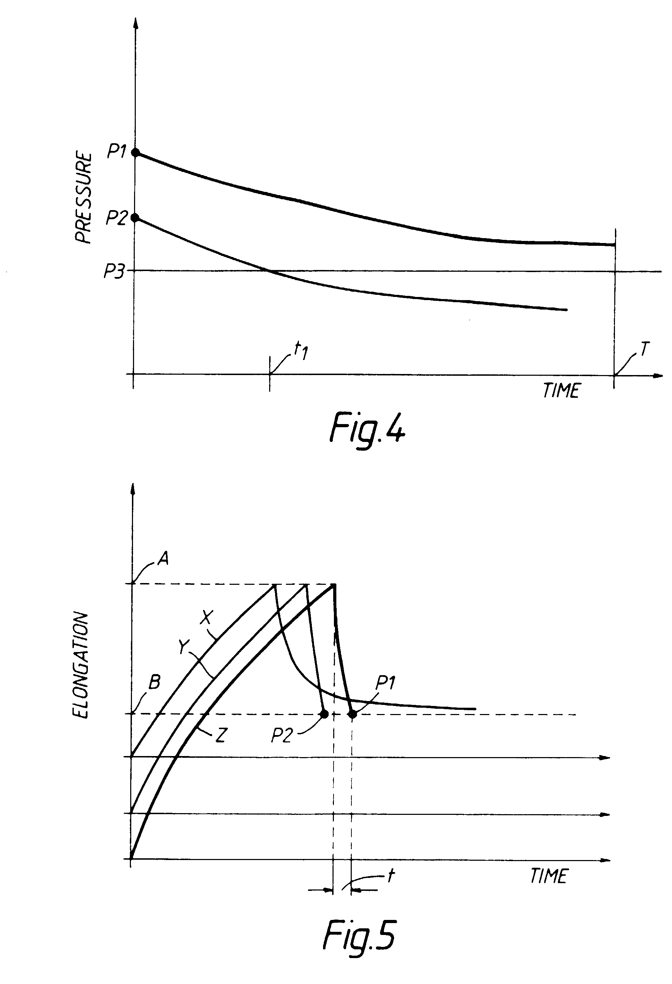

Figure 4 plots the pressure applied by the fixing collar 14 to the region 20 of the shaft 16 as it varies during the life of the bellows - the applied pressure falling off during this time because of ageing effects in the material. The pressure value P3 is the minimum pressure necessary to ensure proper sealing of the bellows on the rod 16. As indicated in Figure 4, if the initial value of the pressure applied by the fixing collar 14 to the region 20 of the rod 16 is P2, then there will be adequate sealing over the first part of the life of the bellows. However, Figure 4 shows that, at a time $t_1$, the pressure has fallen below the limit value P3, and adequate sealing is no longer available. However, if the initial value of the pressure is P1, Figure 4 shows that the pressure will be maintained above the minimum level P3 at least until a time T which is the maximum life of the bellows. The relationship between initial pressure value and final pressure value is determined by the material (EPDM-polypropylene) and the production technique used (blow-moulding). Therefore, if the bellows is produced by blow-moulding from EPDM-polypropylene, it is necessary to ensure that the initial pressure applied by the fixing collar 14 to the rod region 20 has a value of P1 at least - and the pressure will then be maintained above the minimum level for the life of the bellows.

Figure 5 shows graphs plotting the stretching and resiling of the bellows material (vertical axis) against time (horizontal axis). The point B on the vertical axis represents the value of the diameter B (see Figures 1 to 3) of the rod region 20. Point A on the vertical axis represents the value of diameter A (Figs. 1 to 3), being the diameter of the boss 22.

The curve X relates to a bellows for which the initial diameter of the collar 14 is "X". The diameter X is relatively small, and the effect of this is that the material becomes so stretched in passing over the boss 22 that, as shown by curve X, the diameter never resiles to the value B (the diameter of the rod region 20). Therefore, the bellows provides unsatisfactory sealing - even at the beginning of the life of the bellows.

Curve Y corresponds to Curve X but relates to a bellows for which the diameter of the fixing collar 14 initially is Y. Curve Y shows how the material is stretched to pass over the diameter A of the boss 22 and then resiles back to the diameter B of the region 20. In this case, however, the pressure which the collar 14 applies to the region 20 of the rod 16 has the value P2. As shown by Figure 4, this pressure is unsatisfactory because it will fall below the minimum value P3 during the life of the bellows.

Finally, curve Z relates to a bellows for which the initial diameter of the fixing collar 14 is Z. Again, the curve shows how the fixing collar is stretched to pass over the boss 22 with diameter A and then resiles to diameter B, the diameter of the mounting region 22 of the shaft. In this case, the pressure applied to the mounting region 20 is P1. As shown in Figure 4, this value will provide proper sealing throughout the life of the bellows.

The time period t in Figure 5 shows the period during which the stretched collar resiles to grip the outer region 20. This time period needs to very short in order to ensure satisfactory fitting.

It has been found that when the ratio of diameter A to diameter B lies between 1.4 and 1.8, the desired initial gripping pressure P1 is achieved when diameter Z satisfies the following relationship:

$$1.2 < (A - Z)/Z < 2$$

## Claims

1. A protective bellows (5) made of low-elasticity thermoplastic material in combination with and mounted on a rod-like member (16), the bellows having an integral fixing collar (14) which has been moved axially along the rod-like member (16) from an end thereof and resiliently fitted onto and around a circumferentially extending mounting surface (20) of predetermined diameter (B) on the rod-like member, the rod-like member also having a circumferentially extending intermediate surface (22) which is axially positioned between the mounting surface (20) and the end of the rod-like member (16) and which has a diameter (A) greater than the predetermined diameter (B) of the mounting surface (20), so that the fixing collar (14) has to be initially stretched to pass over the intermediate surface (22) in order to be mounted onto the mounting surface (20), characterised in that the initial diameter of the fixing collar (14) is so selected in relation to the diameter (A) of the intermediate surface (22) and in relation to the elasticity of the thermoplastic material that the pressure which the resiled fixing collar (14) exerts on the mounting surface (20) exceeds a predetermined minimum value through the expected life of the bellows.

2. A bellows according to claim 1, characterised in that the thermoplastic material is EPDM-polypropylene.

3. A bellows according to claim 1 or 2, characterised in that the ratio (A/B) of the diameter of the intermediate surface (22) to the diameter of the mounting surface (20) lies between 1.4 and 1.8, and in that the initial diameter (Z) of the fixing collar (14) satisfies the following relationship, that is to say:

$$1.2 < (A - Z)/Z < 2$$

4. A bellows according to any preceding claim, characterised in that the rod-like member is a steering mechanism rod in a motor vehicle, in that the mounting surface (20) is the surface of the steering mechanism rod, and in that the intermediate surface is the surface of a boss (22) on the steering mechanism rod.

5. A bellows according to claim 4, characterised by a fixing collar (12) at the other end of the bellows which is secured around a casing (18) for the steering mechanism from which protrudes the steering mechanism rod (16).

**Patentansprüche**

1. Schutzbalg (5) aus niedrigelastischem, thermoplastischem Material in Kombination mit und befestigt auf einem stangenartigen Bauteil (16), wobei der Balg einen angeformten Befestigungskragen (14) aufweist, der axial entlang dem stangenartigen Bauteil (16) von dessen einem Ende aus bewegt wurde, und federnd auf und um eine sich in Umfangsrichtung erstreckende Befestigungsfläche (20) von vorgegebenem Durchmesser (B) des stangenartigen Bauteils gelengt, wobei das stangenartige Bauteil zusätzlich eine sich in Umfangsrichtung erstreckende Zwischenfläche (22) aufweist, die axial zwischen der Befestigungsfläche (20) und dem Ende des stangenartigen Bauteils (16) angeordnet ist und einen Durchmesser (A) größer als der vorgegebene Durchmesser (B) der Befestigungsfläche (20) aufweist, wodurch der Befestigungskragen (14) zwecks Anordnung auf der Befestigungsfläche (20) zunächst aufgeweitet werden muß, um über die Zwischenfläche (22) zu gelangen,
**dadurch gekennzeichnet**,
daß der Anfangsdurchmesser des Befestigungskragens (14) in Bezug auf den Durchmesser (A) der Zwischenfläche (22) und in Bezug auf die Elastizität des thermoplastischen Materials so ausgewählt ist, daß der Druck, den der entspannte Befestigungskragen (14) auf die Befestigungsfläche (20) ausübt, während der erwarteten Lebensdauer des Balgs einen vorgegebenen Minimalwert übersteigt.

2. Schutzbalg nach Anspruch 1, dadurch gekennzeichnet, daß das thermoplastische Material EPDM-Polypropylen ist.

3. Schutzbalg nach einem der Ansprüche 1 oder 2, dadurch gekennzeichnet, daß das Verhältnis (A/B) des Durchmessers der Zwischenfläche (22) zu dem Durchmesser der Befestigungsfläche (20) zwischen 1,4 und 1,8 liegt und daß der ursprüngliche Durchmesser (Z) des Befestigungskragens (14) der nachfolgenden Beziehung genügt:

$$1{,}2 < (A - Z) / Z < 2$$

4. Schutzbalg nach einem der vorangehenden Ansprüche, dadurch gekennzeichnet, daß das stangenartige Bauteil die Stange eines Lenkmechanismus eines Kraftfahrzeuges ist, und daß die Befestigungsfläche (20) die Oberfläche der Stange des Lenkmechanismus ist, und daß die Zwischenfläche die Oberfläche eines Wulstes (22) des Lenkmechanismus ist.

5. Schutzbalg nach Anspruch 4, gekennzeichnet durch einen Befestigungskragen (12) am anderen Ende des Balgs, wobei der Befestigungskragen (12) entlang eines Gehäuses (18) des Lenkmechanismus gesichert ist, von dem aus sich die Stange (16) des Lenkmechanismus erstreckt.

**Revendications**

1. Soufflet protecteur (5) réalisé en en matière thermoplastique à faible élasticité en combinaison avec un élément en forme de tige (16) et monté sur celui-ci, le soufflet comportant un collier de fixation intégré (14) qui a été déplacé axialement le long de l'élément en tige (16) depuis une extrémité de celui-ci et monté de façon élastique sur et autour d'une surface de montage (20) qui s'étend circonférentiellement d'un diamètre prédéterminé (B) sur l'élément en tige, l'élément en tige comportant également une surface intermédiaire (22) qui s'étend circonférentiellement, qui est positionnée axialement entre la surface de montage (20) et l'extrémité de l'élément en tige (16), et qui a un diamètre (A) supérieur au diamètre prédéterminé (B) de la surface de montage (20), de sorte que le collier de fixation (14) doit être initialement étiré pour passer au-delà de la surface intermédiaire (22) afin d'être monté sur la surface de montage (20), caractérisé en ce que le diamètre initial du collier de fixation (14) est choisi, en relation au diamètre (A) de la surface intermédiaire (22) et en relation à l'élasticité de la matière thermoplastique, de telle manière que la pression que le collier de fixation élastique (14) exerce sur la surface de montage (20) dépasse une valeur minimum prédéterminée sur toute la durée de vie prévisible du soufflet.

2. Soufflet selon la revendication 1, caractérisé en ce que la matière thermoplastique est du polypropylènes EPDM.

3. Soufflet selon l'une ou l'autre des revendications 1 et 2, caractérisé en ce que le rapport (A/B) du diamètre de la surface intermédiaire (22) au diamètre de la surface de montage (20) est situé entre 1,4 et 1,8, et en ce que le diamètre initial (Z) du collier de fixation (14) satisfait la relation suivante, c'est-à-dire :

$$1{,}2 < (A - Z)/Z < 2$$

4. Soufflet selon l'une quelconque des revendications précédentes, caractérisé en ce que l'élément en tige est une tige d'un mécanisme de direction dans un véhicule à moteur, en ce que la surface de montage (20) est la surface de la tige du mécanisme de direction, et en ce que la surface intermédiaire est la surface d'un bossage (22) sur la tige du mécanisme de direction.

5. Soufflet selon la revendication 4, caractérisé par un collier de fixation (12) à l'autre extrémité du soufflet, qui est attaché autour d'un boîtier (18) pour le mécanisme de direction, depuis lequel fait saillie la tige (16) du mécanisme de direction.

Fig.1

Fig.2

Fig.3

6

Fig.4

Fig.5

7